**Europäisches Patentamt**

**European Patent Office**

**Office européen des brevets**

(11) Numéro de publication: **0 279 282 B1**

(12) **FASCICULE DE BREVET EUROPEEN**

(45) Date de publication de fascicule du brevet: **13.05.92** (51) Int. Cl.⁵: **C01B 15/055**, C11D 3/39

(21) Numéro de dépôt: **88101561.4**

(22) Date de dépôt: **04.02.88**

(54) Particules de composés peroxygénés stabilisées, procédé pour leur fabrication, et compositions en contenant.

(30) Priorité: **19.02.87 BE 8700148**

(43) Date de publication de la demande:
**24.08.88 Bulletin 88/34**

(45) Mention de la délivrance du brevet:
**13.05.92 Bulletin 92/20**

(84) Etats contractants désignés:
**AT BE CH DE ES FR GB IT LI NL SE**

(56) Documents cités:
FR-A- 2 229 766
FR-A- 2 453 212
GB-A- 2 085 937

CHEMICAL ABSTRACTS, vol. 99, 1983, page 112, résumé no. 55833y, Columbus, Ohio, US; & JP-A-58 74 508 (MITSUBISHI GAS CHEMICAL CO. INC.) 06-05-1983

(73) Titulaire: **INTEROX Société Anonyme**
**Rue du Prince Albert, 33**
**B-1050 Bruxelles(BE)**

(72) Inventeur: **Chauvier, Jean-Marie**
**Rue de la Taille, 38**
**B-5790 Jemeppe-sur-Sambre(BE)**
Inventeur: **Moussiaux, Léon**
**Rue J.J. Merlot, 87**
**B-5670 Sambreville(BE)**
Inventeur: **Scoman, Henry**
**Rue des Combattants, 31**
**B-5670 Sambreville(BE)**

(74) Mandataire: **Lederer, Franz, Dr. et al**
**Lederer, Keller & Riederer Patentanwälte**
**Lucile-Grahn-Strasse 22**
**W-8000 München 80(DE)**

Rank Xerox (UK) Business Services
(3.08/2.19/2.0)

EP 0 279 282 B1

**Description**

La présente invention concerne des particules de composés peroxygénés stabilisées, un procédé pour leur fabrication, ainsi que des compositions à action de blanchiment contenant ces particules.

Il est bien connu que des composés peroxygénés minéraux, notamment les percarbonates, perphosphates et peroxymonosulfates de métaux alcalins, peuvent être employés comme agents de blanchiment dans les mélanges détergents en poudre.

La stabilité au stockage de ces composés peroxygénés, surtout en atmosphère humide, et leur stabilité vis-à-vis des autres constituants des poudres détergentes est toutefois insuffisante.

On a tenté de remédier à ces inconvénients en utilisant le perborate de sodium tétrahydraté comme agent de blanchiment, parce qu'il est relativement stable à la décomposition dans un milieu détergent pulvérulent. Toutefois, la stabilité du perborate de sodium tétrahydraté se dégrade sérieusement lorsqu'il est stocké à des températures plus élevées.

Pour améliorer la stabilité au stockage des particules de composés peroxygénés minéraux, on a proposé de les additionner de divers types d'agents stabilisants, tels que des sels solubles de métaux alcalino-terreux, en particulier de magnésium (voir notamment brevet FR-A-776485 (INDUSTRIEELE MAATSCHAPPIJ VOORHEEN NOURY & VAN DER LANDE) et CHEMICAL TRADE JOURNAL AND CHEMICAL ENGINEER, 12 décembre 1952, page 1417 et 1418).

Cette addition n'a toutefois pas permis de résoudre de manière satisfaisante le problème de la stabilité au stockage de longue durée de ces composés peroxygénés à température relativement élevée.

La présente invention vise dès lors à fournir des particules de composés peroxygénés qui ne présentent pas les inconvénients des produits connus et qui sont particulièrement stables au stockage à température élevée.

La présente invention concerne à cet effet des particules de composés peroxygénés choisis parmi les persels de métaux alcalins, stabilisées par incorporation d'une combinaison d'ions métalliques comprenant des ions magnésium et des ions zinc.

Les composés peroxygénés dont sont constituées les particules de l'invention sont tous les persels de métaux alcalins normalement instables. Parmi ceux-ci, les plus utilisés sont les perborates, les percarbonates, les perpyrophosphates, les pertripolyphosphates, les persilicates et les peroxymonosulfates de métaux alcalins et plus particulièrement de sodium et de potassium. Les particules de composés peroxygénés stabilisées peuvent contenir un même type de persels ou un mélange de persels différents.

L'invention s'est révélée intéressante dans le cas de particules constituées des diverses formes de perborates de sodium, à savoir le perborate de sodium anhydre et les perborates mono-, tri- et tétrahydatés. L'invention s'est révélée particulièrement intéressante dans le cas des particules de perborates industriels, à savoir les mono- et tétrahydrates et tout spécialement dans le cas des particules de perborate de sodium tétrahydraté.

Les persels constituant les particules selon la présente invention peuvent être préparés de toute manière connue en soi. On peut par exemple les préparer par des procédés en lit fluide alimenté par des solutions du sel de métal alcalin précurseur et de peroxyde d'hydrogène (voir par exemple brevet US-A-4329244 (SOLVAY & Cie)). On peut encore utiliser d'autres méthodes de fabrication des persels basées par exemple sur leur cristallisation à partir de leurs solutions aqueuses. Le perborate de sodium hydraté, en particulier, peut être obtenu par cristallisation d'une solution mixte de métaborate de sodium et de peroxyde d'hydrogène.

Les particules de composés peroxygénés sont, selon l'invention, stabilisées par incorporation d'une combinaison d'ions métalliques comprenant au moins deux types d'ions différents. Ces deux types d'ions différents sont, d'une part, des ions magnésium et, d'autre part, des ions zinc.

La stabilisation des particules de composés peroxygénés est appréciée de manière générale par l'évolution de leur perte en oxygène actif : plus les particules sont stables, plus la perte en oxygène actif, exprimée en pourcentage de la teneur en oxygène actif initial, est faible.

Pour que la stabilité des particules de l'invention soit satisfaisante, il est avantageux qu'elles contiennent au moins 400 ppm (parties par million) d'ions magnésium, et de préférence au moins 500 ppm. Simultanément, il convient que les particules contiennent au moins 10 ppm d'ions zinc, et de préférence au moins 40 ppm.

Par ailleurs, la stabilité des particules de l'invention n'augmente plus de manière significative pour des teneurs en ions magnésium supérieures à 1000 ppm environ et, simultanément, pour des teneurs en ions zinc supérieures à 100 ppm environ.

2

Les meilleurs résultats, en ce qui concerne la stabilité des particules de l'invention, ont été enregistrés lorsqu'elles comprennent une combinaison d'ions magnésium, à des teneurs comprises entre 500 et 800 ppm, et d'ions zinc, à des teneurs de l'ordre de 80 ppm.

L'incorporation de la combinaison d'ions métalliques dans les particules de composés peroxygénés à stabiliser peut être réalisée par tout moyen connu.

Une technique préférée consiste à opérer en pulvérisant sur les particules de persels en mouvement une solution aqueuse (S) d'au moins un composé au moins partiellement hydrosoluble de magnésium et d'au moins un composé au moins partiellement hydrosoluble de zinc, et en évaporant l'eau. Cette technique présente l'avantage de conduire à des particules de composés peroxygénés à la surface desquels les ions stabilisants magnésium et zinc sont uniformément répartis.

Les composés au moins partiellement hydrosolubles utilisables pour la mise en oeuvre de la technique ci-dessus sont en général les sels des métaux concernés. Il peut s'agir de sels organiques ou de sels inorganiques, hydratés ou non.

Parmi les sels utilisables, on peut citer :
- les sels organiques, tels que les acétates et lactates, de magnésium et de zinc; les benzoates de zinc; les formates de magnésium et de zinc; le salicylate de magnésium; les butyrate, citrate et picrate de zinc;
- les sels inorganiques, tels que les nitrates et sulfates de magnésium et de zinc; les bromures, chlorures et iodures de magnésium et de zinc; les bromates, chromates et fluosilicates de zinc; les iodate, molybdate et thiosulfate de magnésium; l'hypophosphite de zinc.

Des composés de magnésium et de zinc préférés sont les sels inorganiques au moins partiellement hydrosolubles de ces métaux; parmi ces derniers, on préfère plus particulièrement, notamment pour des raisons d'accessibilité, faire usage des nitrates et sulfates de ces métaux et tout particulièrement des sulfates hydratés.

Il va de soi que l'utilisation de plusieurs composés différents de chacun des métaux concernés et/ou la mise en oeuvre de plusieurs solutions aqueuses contenant des ions métalliques différents entrent également dans le cadre de l'invention pour autant que l'on satisfasse à la condition essentielle de l'invention, à savoir que les particules de composés peroxygénés soient stabilisées par une combinaison des ions métalliques telle que définie plus haut.

Les solutions aqueuses (S) des composés des métaux concernés sont mises en oeuvre en général à une température légèrement inférieure, égale ou légèrement supérieure à celle des particules sur lesquelles elles sont pulvérisées. En général, la température des solutions aqueuses est comprise entre la température des particules sur lesquelles elles sont pulvérisées et cette température plus ou moins 25°C.

La concentration dans les solutions aqueuses du ou des composés des métaux concernés est si possible proche de la concentration de saturation dans les conditions de mise en oeuvre de la solution. De cette manière, la quantité d'eau à évaporer est minimale. Pour le reste, les conditions générales de la pulvérisation sont évidemment choisies de manière à conférer aux particules de composé peroxygéné les teneurs en ions stabilisants Mg et Zn mentionnées plus haut.

Les températures auxquelles on opère la pulvérisation et l'évaporation sont évidemment choisies selon la nature du composé peroxygéné. Pendant ces opérations, les particules de composé peroxygéné sont maintenues à une température inférieure à la température de décomposition du composé peroxygéné et en général inférieure à 90°C. Pour l'évaporation, on utilise en général des températures comprises entre 30 et 80°C.

La pulvérisation peut être réalisée selon différentes techniques par exemple en lit fluidisé, sur sole tournante, dans un tambour rotatif ou dans tout autre dispositif analogue connu en soi.

L'évaporation peut se faire en même temps et dans la même enceinte que la pulvérisation ou dans un appareil distinct. On opère en général selon un procédé en continu. Un dispositif tel qu'un lit fluide ou tout autre dispositif connu en soi peut convenir. Dans ce cas, la température du lit fluidisé sera comprise entre 30 et 80°C.

L'utilisation d'un lit fluide s'est révélée particulièrement avantageuse, d'une part parce que la pulvérisation et l'évaporation sont réalisées simultanément dans le même appareil et d'autre part parce que cette technique permet l'obtention d'une répartition plus uniforme des ions stabilisants Mg et Zn.

Comme gaz de fluidisation, on peut utiliser n'importe quel gaz inerte et en particulier l'air. Ce gaz peut être chauffé pour maintenir la température du lit fluide à la valeur désirée. On peut aussi utiliser d'autres moyens de chauffage tels qu'un faisceau tubulaire placé dans le lit fluide.

On peut également opérer selon un procédé semblable mais en discontinu.

Les particules stabilisées selon l'invention contiennent de préférence des quantités extrêmement faibles d'ions stabilisants, ce qui leur assure une teneur en oxygène actif toujours élevée. D'autre part, comme les quantités de solutions aqueuses (S) mises en oeuvre sont faibles, l'évaporation nécessite peu de calories.

La présente invention concerne également les compositions de lavage ou de blanchiment contenant des particules d'au moins un composé peroxygéné stabilisées telles que décrites ci-dessus. De telles compositions contiennent en général outre le ou les composés peroxygénés, un ou plusieurs agents tensio-actifs choisis parmi les agents tensio-actifs cationiques, anioniques, non-ioniques, amphotères ou ampholytiques tels que par exemple ceux cités dans le livre "Surface Active Agents" de A.M. Schwarz et J.W. Perry ou dans "Encyclopedia of Surface Active Agents" Vol. I, 1961 et Vol. II, 1964 de I.P. Sisley et P.I. Wood, et un ou plusieurs auxiliaires de détergence appelés "builders" dont une des fonctions principales consiste à séquestrer les ions métalliques responsables de la dureté de l'eau tels que par exemple le tripolyphosphate de sodium, le nitrilotriacétate de sodium et les polyacrylates.

Ces compositions peuvent également contenir d'autres substances choisies en fonction du domaine spécial d'application de la composition. Parmi celles-ci on peut citer les activateurs des persels, les azurants optiques, les inhibiteurs de mousse, les enzymes, les inhibiteurs de ternissement et agents d'anti-redéposition des salissures, les désinfectants, les inhibiteurs de corrosion, les parfums, les colorants, les régulateurs de pH, les agents capables de libérer du chlore actif, etc.

Les particules de composés peroxygénés stabilisées suivant l'invention satisfont au test suivant. Elles ne perdent pas plus de 8 % d'oxygène actif lorsqu'elles sont maintenues en solution dans l'eau (à raison de 30 g de composé peroxygéné par litre d'eau) à 60°C pendant 60 minutes. La teneur en oxygène actif des particules à l'issue du test est mesurée par la méthode au permanganate. Ce test est appelé ci-après Test S.

Les exemples ci-dessous illustrent l'invention.

Exemple (essai 1 conforme à l'invention et essais 2R et 3R de référence)

On met en oeuvre des particules de perborate de sodium tétrahydraté (PBS4) fabriquées par cristallisation d'une solution mixte de métaborate de sodium et de peroxyde d'hydrogène.

Ces particules de PBS4 sont ensuite séchées dans un sécheur en lit fluidisé. Avant leur entrée dans ce dernier, elles sont stabilisées par des combinaisons d'ions magnésium, d'ions zinc et d'ions étain incorporés par pulvérisation, sur les particules, d'une solution dans laquelle les ions Mg proviennent du sulfate de magnésium, les ions Zn du sulfate de zinc heptahydraté et les ions Sn du chlorure d'étain dihydraté.

Dans le Tableau ci-après sont rassemblés les caractéristiques et les résultats des essais effectués.

Tableau

| Essai | 1 | 2R | 3R |
|---|---|---|---|
| Teneur en magnésium du PBS4 (ppm) | 800 | - | 800 |
| Teneur en zinc du PBS4 (ppm) | 80 | 35 | - |
| Teneur en étain du PBS4 (ppm) | - | - | 40 |
| Perte en oxygène actif du PBS4 avant stabilisation (%) (selon le test S) | 21 | 21 | 21 |
| Perte en oxygène actif du PBS4 après stabilisation (%) (selon le test S) | 5 | 13 | 21 |

Les résultats des essais montrent que seul le PBS4 contenant à la fois des ions magnésium et zinc dans les quantités respectives préférées selon l'invention (essai 1) a une perte en oxygène actif, selon le test S, inférieure à 8 % en poids.

**Revendications**

1. Particules de composés peroxygénés choisis parmi les persels de métaux alcalins, stabilisées par incorporation d'une combinaison d'ions métalliques, caractérisées en ce que la combinaison d'ions métalliques comprend des ions magnésium et des ions zinc.

**2.** Particules selon la revendication 1, caractérisées en ce que les ions magnésium y sont contenus à raison d'au moins 400 ppm.

**3.** Particules selon les revendications 1 et 2, caractérisées en ce que les ions zinc y sont contenus à raison d'au moins 10 ppm.

**4.** Procédé pour la fabrication de particules de composés peroxygénés stabilisées selon les revendications 1 à 3, caractérisé en ce que la combinaison d'ions métalliques est réalisée en pulvérisant sur les particules en mouvement une solution aqueuse d'au moins un composé au moins partiellement hydrosoluble de magnésium et d'au moins un composé au moins partiellement hydrosoluble de zinc et en évaporant l'eau.

**5.** Procédé selon la revendication 4, caractérisé en ce que le composé de magnésium et le composé de zinc sont choisis parmi les sels inorganiques au moins partiellement hydrosolubles de ces métaux.

**6.** Compositions de lavage ou de blanchiment contenant des particules de composés peroxygénés selon l'une des revendications 1 à 3.

**Claims**

**1.** Particles of peroxygen compounds selected from the persalts of alkali metals, stabilised by incorporation of a combination of metal ions, characterized in that the combination of metal ions comprises magnesium ions and zinc ions.

**2.** Particles according to claim 1, characterized in that the magnesium ions are contained in it in an amount of at least 400 ppm.

**3.** Particles according to claims 1 and 2, characterized in that the zinc ions are contained in it in an amount of at least 10 ppm.

**4.** Process for the preparation of particles of stabilized peroxygen compounds according to claims 1 to 3, characterized in that the combination of metal ions is realised by spraying on the moving particles an aqueous solution of at least one magnesium compound which is at least partially water soluble and of at least one zinc compound which is at least partially water soluble and by evaporating the water.

**5.** Process according to claim 4, characterized in that the magnesium compound and the zinc compound are selected from the anorganic salts of this metals which are at least partially water soluble.

**6.** Washing or bleaching compositions containing particles of peroxygen compounds according to one of claims 1 to 3.

**Patentansprüche**

**1.** Partikel aus Persauerstoffverbindungen, ausgewählt unter den Persalzen von Alkalimetallen, die durch Einarbeitung einer Kombination von Metallionen stabilisiert sind, dadurch gekennzeichnet, daß die Kombination von Metallionen Magnesiumionen und Zinkionen umfaßt.

**2.** Partikel nach Anspruch 1, dadurch gekennzeichnet, daß die Magnesiumionen darin in einer Menge von wenigstens 400 ppm enthalten sind.

**3.** Partikel nach den Ansprüchen 1 und 2, dadurch gekennzeichnet, daß die Zinkionen darin in einer Menge von wenigstens 10 ppm enthalten sind.

**4.** Verfahren zur Herstellung von Partikeln aus stabilisierten Persauerstoffverbindungen nach den Ansprüchen 1 bis 3, dadurch gekennzeichnet, daß die Kombination von Metallionen hergestellt wird durch Sprühen einer wässrigen Lösung wenigstens einer Magnesiumverbindung, die wenigstens teilweise wasserlöslich ist, und wenigstens einer Zinkverbindung, die wenigstens teilweise wasserlöslich ist, auf die Teilchen in Bewegung und durch Verdampfen des Wassers.

**5.** Verfahren nach Anspruch 4, dadurch gekennzeichnet, daß die Magnesiumverbindung und die Zinkverbindung ausgewählt sind aus den anorganischen, wenigstens teilweise wasserlöslichen Salzen dieser Metalle.

**6.** Wasch- oder Bleichzusammensetzungen, die Partikel aus Persauerstoffverbindungen nach einem der Ansprüche 1 bis 3 enthalten.